# EUROPEAN PATENT APPLICATION

(11) **EP 1 157 800 A1**
(43) Date of publication of application: **28.11.2001**
(21) Application number: 00902084.3
(22) Date of filing: 04.02.2000
(51) Int. Cl.: B29C 45/14, B29C 65/44

(54) **METHOD FOR JOINING SYNTHETIC RESIN TO METALLIC PLATE**

(30) Priority: 05.02.1999 JP 2904899
(71) Applicant: Denson Co., Ltd., Yashio-shi, Saitama 340-0816 (JP); Able Co., Ltd., Tsubame-shi, Niigata 959-1232 (JP); NISSHIN STEEL CO., LTD., Chiyoda-ku Tokyo 100-8366 (JP)
(72) Inventor: TAMURA, Shigeki, Yashio-shi, Saitama 340-0816 (JP)
(74) Representative: Andrews, Timothy Stephen
(86) International application number: JP0000605
(87) International publication number: WO0046007

(57) **Abstract**

A method for producing a product where a synthetic resin film is joined to a metallic plate and hardly separates from the metallic plate effectively. A metallic plate is mounted in an injection mold for injecting synthetic resin thereinto, and a synthetic resin is injected into the mold to join a synthetic resin film to the metallic plate. A curling part of fold-back part is provided to the periphery of the metallic plate. By making use of the foaming and expansion or of the curling and shrinkage of the synthetic resin forced into the curling or fold-back part, the join of the synthetic resin to the metallic plate is strengthened. A metallic plate and a thermoplastic synthetic resin molded piece each having a similar mutual contact face are prepared, the thermoplastic synthetic resin molded piece is pressed to the heated metallic plate, and a synthetic resin film is strongly joined to the metallic plate by making use of the melt, curling, and shrinkage of the contact face of the thermoplastic synthetic resin molded piece.

## Description

### Technical Field

The present invention relates to a method for joining synthetic resin to a metallic plate, and more particularly to a method for joining synthetic resin to a metallic plate wherein the synthetic resin and metallic plate may be joined together in their firmly joined state.

### Background Art

There are known several conventional methods for joining synthetic resin to a metallic plate. For example, one method uses an adhesive to join synthetic resin to a metallic plate. In another method, synthetic resin and a metallic plate are joined together by inserting the metallic plate into an injection mold at the time when the synthetic resin is injected into the injection mold.

Firstly, the method of using an adhesive for joining synthetic resin to a metallic plate has problems in that it must use any synthetic resin adhesive that agrees with the synthetic resin as well as the metallic plate, and that it involves the additional steps of coating, bonding and drying the adhesive.

Secondly, the method of inserting a metallic plate into an injection mold at the time when the synthetic resin is injected into injection mold may have no problem when the metallic plate is embedded into the synthetic resin such as for the purpose of strengthening the injected synthetic resin by means of the metallic plate, but has problems when the synthetic resin and metallic plate are simply joined together, because there is a difference in the thermal expansion between the synthetic resin and metallic plate that might easily cause the two elements to be detached.

### Disclosure of Invention

The present invention addresses the problems of the prior art methods described above. One object of the present invention is to solve the those problems by providing a method for joining synthetic resin to a metallic plate, the method comprising mounting a metallic plate obtained by pressing a metallic blank into a particular shape into a synthetic resin injection metal mold, and injecting synthetic resin into the metal mold, wherein the peripheral edge or other portions of the metallic plate are designed to have the particular configuration that permits the metallic plate to be attached to the injected synthetic resin more firmly and tightly.

Another object of the present invention is to solve the above problems by providing a method for joining synthetic resin to a metallic plate, wherein the method includes providing a thermoplastic synthetic resin molded product, heating a metallic plate obtained by pressing a metal blank into a particular shape, making the thermoplastic resin molded product into direct contact with the heated metallic plate and thereby joining the two elements into a single unit, leaving the thus joined unit to cool, and allowing the thermoplastic synthetic resin on the molded product to contract by itself.

Generally, the method according to present invention is designed to join synthetic resin to a metallic plate, and may be summarized as follows.

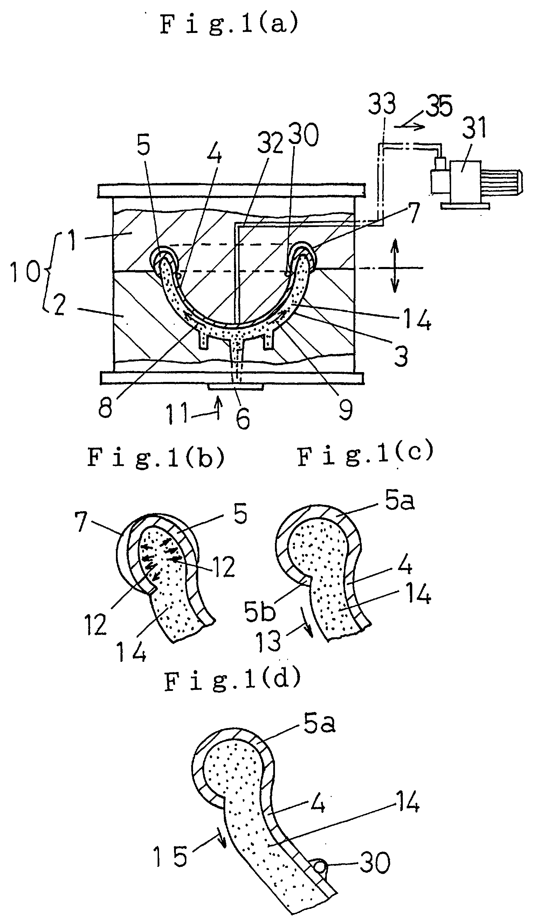

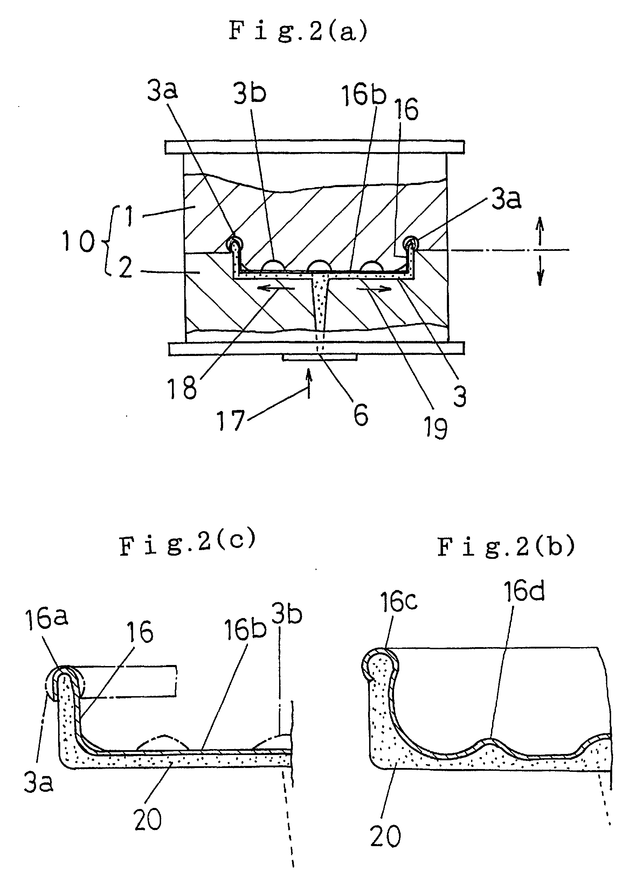

Referring first to Fig. 1 (a) through Fig. 1 (d) and Fig. 2 (a) through Fig. 2 (c), respectively, the method includes the steps of obtaining a metallic plate 4, 16 by pressing a metal blank into a particular shape, mounting the metallic plate 4, 16 into a synthetic resin injection metal mold 10, injecting synthetic resin 14, 20 into the metal mold 10, and joining the injected synthetic resin to the metallic plate 4, 16.

One aspect of the present invention is to provide a method wherein the metallic plate 4 includes a curled portion 5a on its peripheral edge portion that may be obtained by curling the peripheral edge toward the side of the metallic plate 4 on which the synthetic resin 14 is to be joined to the metallic plate 4. More specifically, the curled portion 5a may be formed such that the distance between the free end 5b of the curled portion 5a and the side of the metallic plate 4 on which the metallic plate 4 and synthetic resin 14 are to be joined is smaller than the space inside the curled portion 5a (Fig. 1 (d)). Then, joining the synthetic resin to the metallic plate may be accomplished by placing the metallic plate 4 into the synthetic resin injection metal mold, and injecting synthetic resin into the metal mold such that some of the synthetic resin injected onto the side of metallic plate 4, on which the metallic plate 4 and synthetic resin 14 are to be joined, can be injected under pressure into the curled portion 5a.

According to the above method, the part of the synthetic resin 14 injected under pressure into the curled portion 5a may be allowed to foam and expand, and may be allowed to contract by itself when it becomes hardened. This ensures that the peripheral edge portion of the metallic plate and the synthetic resin can be joined more firmly and tightly.

Another aspect of the present invention is to provide a method wherein the metallic plate 4 includes a fold-back portion 5 on its peripheral edge that may be obtained by curling the peripheral edge toward the side of the metallic plate 4 on which the injected synthetic resin 14 is to be joined to the metallic plate 4 (Fig. 1 (b)). More specifically, joining synthetic resin to the metallic plate may be accomplished by placing the metallic plate 4 into the synthetic resin injection metal mold, and injecting synthetic resin into the metal mold such that some of the synthetic resin 14 injected onto the side of the metallic plate 4, on which the metallic plate 4 and synthetic resin 14 are to be joined, can be injected under pressure into the fold-back portion 5, thereby the fold-back portion 5 may be formed such that the space inside the fold-back portion 5 is larger that the distance between the free end of the fold-back portion 5 and the side of the metallic plate 4 on which the metallic plate 4 and synthetic resin 14 are to be joined.

According to the above method, the part of the synthetic resin 14 injected under pressure into the fold-back portion 5 may be allowed to foam and expand, causing the fold-back portion 5 to be deformed under the pressure, and may be allowed to contract by itself when it becomes hardened. Similarly to the method according the first aspect described earlier, this ensures that the peripheral edge portion of the metallic plate and the synthetic resin can be joined more firmly and tightly.

In connection with the method according to the second aspect, it should be noted that a space 7 is provided between the fold-back portion 5 of the metallic plate 4 that is now mounted inside the metal mold 10 and the portion of the metal mold 10 opposite the peripheral fold-back portion 5 of the metallic plate 4. This space 7 is required to accept any expansion of the fold-back portion 5 that occurs inside the fold-back portion 5.

In each of the first and second methods as described above, it may be seen from Fig. 2 (a) through Fig. 2 (c) that the metallic plate 16, which is placed inside the injection metal mold 10, includes portions other than the peripheral edge portion thereof that may become deformed into a curved surface having projections and depressions thereon. This deformation may be provided and produced by the pressure of the synthetic resin 20 when the synthetic resin 20 is injected onto the side of the metallic plate 16, on which the synthetic resin 20 is to be joined to the metallic plate 16, inside the metal mold 10. More specifically, the portion of the metallic plate 16 other than its peripheral edge portion may become deformed into the curved surface having projections and depressions under the pressure of the synthetic resin 20 that is injected into the metal mold 10, and onto the side of the metallic plate 16, on which the synthetic resin 20 is to be joined to the metallic plate 16, and the injected synthetic resin 20 may be allowed to contract by itself when it becomes hardened. This contraction may permit the synthetic resin 20 to be joined more firmly to the curved surface of the metallic plate 16.

In this case, however, it should be noted that there must be the space between the injection metal mold 10 and the metallic plate 16 set inside the metal mold 10 that can absorb the deformation of the portion of the metallic plate 16 other than its peripheral edge portion.

In any of the methods described above, the metallic plate 4, 16 may previously be formed to have projections and depressions on the portion other than the peripheral edge portion on the side of the metallic plate 4, 16 on which synthetic resin is to be joined to the metallic plate 4, 16, and then may be mounted inside the metal mold 10. In this way, the synthetic resin that has been injected into the metal mold 10 can adhere to that portion of the metallic plate 4, 16, and this adherence can be increased when the injected synthetic resin becomes hardened and then contracts by itself. Thus, the synthetic resin can be joined more firmly to the metallic plate.

According to any of the methods described above, a final product may be obtained as a single unit by mounting the metallic plate 4, 16 inside the synthetic resin injection metal mod 10 and then injecting the synthetic resin 14, 20 into the metal mold 10, respectively. It should be noted that there are restrictions in that the method may depend largely upon the particular requirements of a final product, such as the shape, dimensions, and other factors. It should also be noted that, when a certain synthetic resin, such as PP (polypropylene), PE (polyethylene) and the like, that has a great rate of contraction is used, it may be possible that the metal may become deformed due to the difference in the rate of contraction between such synthetic resin and the metal. For this reason, it is necessary to consider the usage, characteristics, and the like of a particular final product, and then choose an appropriate one of the methods described above.

It is noted that any of the methods described above allows for the use of the air pressure when the metallic plate 4 is mounted inside the metal mold 10.

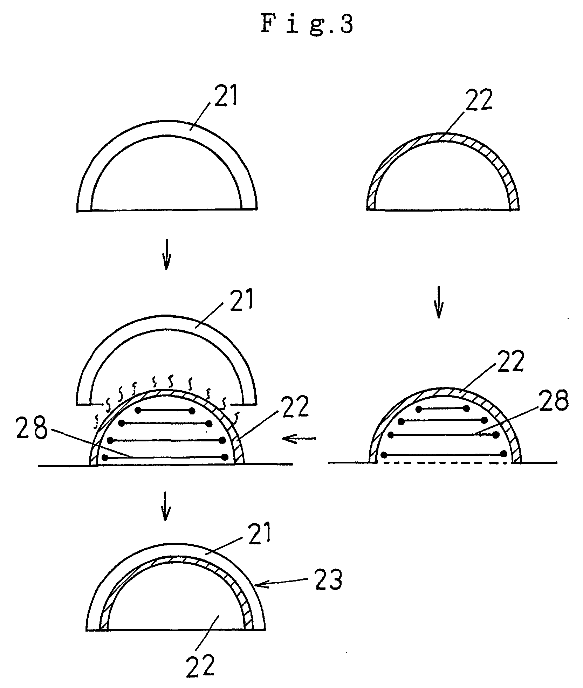

Referring next to Fig. 3, another method for joining synthetic resin to a metallic plate is described. This method includes providing a metallic plate obtained by pressing a metal blank into a particular shape, providing a thermoplastic synthetic resin molded product, heating the metallic plate, making the thermoplastic synthetic resin molded product into direct contact with the heated metallic plate, allowing the synthetic resin on the surface of the molded product engaging the heated metal plate to be melted by the heated metallic plate, and allowing the melted synthetic resin to cool, allowing it to harden and then contract by itself. The contraction causes the synthetic resin to be joined to the metallic plate.

More specifically, the method is described as follows:

A metallic plate 22 is obtained by pressing a metal blank into a particular shape, and a thermoplastic synthetic resin molded product 21 to which the metallic plate 22 is to be joined is provided. In this case, the respective joint surfaces of the metallic plate 22 and molded product being joined together have the analogous shape, respectively. Then, the metallic plate 22 is heated, and the heated metallic plate 22 is placed against the molded product so that the respective joint surfaces of both can engage each other under the applied pressure. Finally, the two elements may be joined together as a single unit.

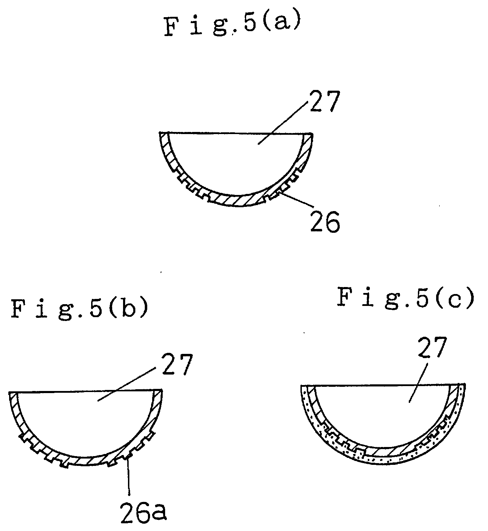

In this method, the metallic plate 22 may previously be formed so that its joint surface can have projections and depressions thereon, as shown in Fig. 5 (a) through Fig. 5 (c). The metallic plate 22 may be heated by using a heater, or by using the high frequency or low frequency current induction heating.

As described, this method includes a preliminary step of providing the metallic plate and thermoplastic synthetic resin molded product that are previously formed into the appropriate shape, respectively, and subsequent steps of engaging them, heating and applying the pressure. Thus, a final product may be obtained as a single unit. Although this method includes more steps as compared with the methods using the injection metal mold described earlier, the thermoplastic synthetic resin on the molded product will have hardened and contracted at the time when it engages the metallic plate. Thus, the difference in the contraction rate between the synthetic resin and metallic plate can be reduced.

In the above description, the metallic plate may be obtained by pressing a metal blank into a particular shape, such as a cooking pan, bowl, mug cup, and other eating/drinking utensils.

When the final product, such as a cooking pan, bowl, cup and the like, that may be obtained according to the method is used for the purposes of cooking, washing, and eating or drinking under the normal temperatures, the synthetic resin cannot be detached from the metallic plate. The shape and dimensions may be determined, depending on the particular usages of the final product, such as polygonal shapes including triangle, square and the like, round shape, elliptical shape, and the like as viewed in plane.

A final product, such as a cooking pan, eating or drinking cup and the like, may be formed so that the metallic plate is located inside and the synthetic resin is located outside, or vice versa.

When the final product having the metallic plate located inside and the synthetic resin located outside is used for the cooking purpose, the high frequency or low frequency current induction heating may be used. This is advantageous in that the final product can retain its heat, thus enhancing the thermal efficiency.

It should be noted that any of the methods described so far allows for the use of the transparent synthetic resins and thermoplastic synthetic resins. The final product, such as a cooking pan, having the metallic plate located inside and such synthetic resin located outside, may be equipped with a thermal sensor outside it that is sensitive to infrared rays. The thermal sensor helps the user know the current internal temperatures within the cooking pan.

The present invention eliminates the use of any adhesive when the synthetic resin and metallic plate are joined together. Thus, the synthetic resin may be detached easily from the metallic plate simply by heating the curling part or fold-back part formed on the peripheral edge portion of the metallic plate, or the curved surface of the metallic plate having projections and depressions. Thus, the present invention meets the environmental requirements, and is convenient for the recycling purposes.

### Brief Description of Drawings

Fig. 1 (a) is a front view illustrating the injection metal mold that may be used in conjunction with the method of the present invention, with some parts being broken away;
Fig. 1 (b) is a sectional view illustrating how the fold-back part is expanded according to the steps of the method shown in Fig. 1 (a);
Fig. 1 (c) is a sectional view illustrating how the synthetic resin inside the fold-back part may contract by itself according to the steps of the method shown in Fig. 1 (a);
Fig. 1 (d) is a sectional view illustrating how the synthetic resin inside the curling part may contract by itself according to different steps of the method shown in Fig. 1 (a);
Fig. 2 (a) is a front view illustrating the injection metal mold that may be used in conjunction with another method of the present invention, with some parts being broken away;
Fig. 2 (b) is a partially enlarged sectional view illustrating the metallic plate before it becomes deformed according to the method shown in Fig. 2 (a);
Fig. 2 (c) is a partially enlarged sectional view illustrating the metallic plate after it has become deformed according to the method shown in Fig. 2 (a);
Fig. 3 illustrates the steps of another method of the present invention;
Fig. 4 (a) illustrates the heating means that may be used in conjunction with the method shown in Fig. 3.
Fig. 4 (b) illustrates another heating means that may be used in conjunction with the method shown in Fig. 3;
Fig. 5 (a) is a sectional view illustrating the metallic plate that may be used in conjunction with the method shown in Fig. 3;
Fig. 5 (b) is a sectional view illustrating another metallic plate that may be used in conjunction with the method shown in Fig. 3;
Fig. 5 (c) is a sectional view illustrating how the synthetic resin is joined to the outside of the metallic plate shown in Fig. 5 (a);
Fig. 6 (a) is a plan view illustrating the metallic plate that may be used in conjunction with the method shown in Fig. 3, wherein the metallic plate has a concentric recess;
Fig. 6 (b) is a plan view illustrating the metallic plate that may be used in conjunction with the method shown in Fig. 3, wherein the metallic plate has a hexagonal recess;
Fig. 6 (c) is a plan view illustrating the metallic plate that may be used in conjunction with the method shown in Fig. 3, wherein the metallic plate has a square recess;
Fig. 6 (d) is a plan view illustrating the metallic plate that may be used in conjunction with the method shown in Fig. 3, wherein the metallic plate has an elliptical recess;
Fig. 7 (a) is a partial sectional view illustrating one product obtained according to the method of the second embodiment;
Fig. 7 (b) is a partial sectional view illustrating another product obtained according to the method of the second embodiment;
Fig. 7 (c) is a partial sectional view illustrating still another product obtained according to the method of the second embodiment;
Fig. 8 illustrates the final product obtained according to the method of the present invention, wherein the product includes thermal sensor means that permits its internal temperature to be sensed from the outside when it is actually used;
Fig. 9 (a) is a front view illustrating the final product obtained according to the method of the present invention, wherein the metallic plate has an indication, such as a label, on its outer wall that can be recognized from the outside;
Fig. 9 (b) is a partial sectional view illustrating the final product shown in Fig. 9 (a); and
Fig. 10 illustrates the final product obtained according to the method of the present invention, wherein the product can be heated by the electromagnetic induction heating when it is actually used.

### Best Mode for Carrying Out the Invention

Several preferred embodiments of the present invention is now described by referring to the accompanying drawings.

### EMBODIMENT 1

Referring first to Fig. 1 (a) through Fig. 1 (d), the first embodiment of the present invention is described.

As shown in Fig. 1 (a), a synthetic resin injection metal mold 10 that may be used in this embodiment consists of an upper-half mold 1 and a lower-half mold 2, and includes a cavity 3 that is formed to conform to the shape of a product.

A metallic plate 4 may be mounted to the upper-half mold 1 forming part of the injection metal mold 10. In this embodiment, the metallic plate 4 has a dome-like shape, which may be obtained by pressing a metal blank into that shape.

The upper-half mold 1 has a suction hole 32 that is open at the central protruding portion of the upper-half mold. The suction hole 32 is connected to an external vacuum pump 31 by way of a hose 33, as shown in Fig. 1 (a). In order to permit the easy mounting of the metallic plate 4 to the injection metal mold 10, the metallic plate 4 may be fitted with an O-ring 30 that surrounds the metallic plate 4, as shown in Fig. 1 (d). The metallic plate 4 may be mounted to the injection metal mold 10 by making use of the suction of the vacuum pump 31 that attracts the metallic plate 4 toward the direction of an arrow 35 (Fig. 1 (a)). Thus, the metallic plate 4 can be held on to the upper-half mold 1 by the air pressure, and the metallic plate 4 cannot drop from the upper-half mold 1.

The metallic plate 4 has a fold-back part 5 on its peripheral edge portion that is bent toward the side of the metallic plate 4 on which synthetic resin 14 is to be joined to the metallic plate 4 (Figs. 1 (a) and (b)). The upper-half mold 1 includes an annular groove 7 that is located opposite the fold-back part 5 of the metallic plate 4 being set therein, and there is a space between the fold-back part 5 and the upper-half mold 1 oppositing the fold-back part 5.

The lower-half mold 2 has an inlet 6 through which synthetic resin (for example, polypropylene) may be fed into the lower-half mold 2, as indicated by an arrow 11. Then, synthetic resin may be injected under the applied pressure, as indicated by arrows 8, 9 (Fig. 1 (a)), forcing the fold-back part 5 to press against the inner wall of the annular groove 7, as indicated by arrows 12, 12 (Fig. 1 (b)). In this way, the curled part 5a, whose outer wall is analogous to the inner wall of the annular groove 7, may be obtained (Fig. 1 (c)).

When the synthetic resin 14 injected into the injection metal mold 10 then becomes hardened, it may contract by itself as shown by an arrow 13 in Fig. 1 (c). Even when this contraction occurs, however, the synthetic resin 14 and curling part 5a can engage each other so firmly because the synthetic resin 14 has been settled inside the curling part 5a, that the peripheral edge portion of the metallic plate 4 can be joined firmly to the outer peripheral portion of the synthetic resin 14. When the product thus obtained is used for the household activities such as cooking, eating/drinking, washing and the like, the synthetic resin 14 cannot be detached from the metallic plate 4 when any temperature change occurs during those activities.

For the metallic plate 4 that includes the curling part 5a on its peripheral edge portion, as shown in Fig. 1 (d), in which the curling part 5a is formed by bending the peripheral edge portion of the metallic plate 4 toward the side thereof on which the synthetic resin 14 is to be joined to the metallic plate 14, and the spacing between the free end 5b (Fig. 1 (c)) of the curling part 5a and the side of the metallic plate 4 on which the synthetic resin 14 is to be joined to the metallic plate 4 is smaller than the space inside the curling part 5a, the metallic plate 4 and synthetic resin 14 can also be joined together. This is because the force that is produced when the synthetic resin 14 hardens and contracts is applied in the direction of an arrow 15, as shown in Fig. 1 (d), causing the synthetic resin 14 to engage the curling part 5a firmly. Thus, the peripheral edge portion of the metallic plate 4 can be joined firmly to the outer peripheral portion of the synthetic resin 14.

Instead of providing the initially curled part 5a on the peripheral edge portion of the metallic plate 4, it is better to provide the fold-back part 5 on the peripheral edge portion because this permits the easy machining and fabrication of the metallic plate 4, and may increase the productivity.

### EMBODIMENT 2

By referring next to Fig. 2 (a) through Fig. 2 (c), the second embodiment is described.

The injection metal mold 10 that may be used in conjunction with this embodiment consists of an upper-half mold 1 and a lower-half mold 2. A metallic plate 16 is formed like a box by pressing a metal blank into that shape, and is mounted inside the injection metal mold 10. The metallic plate 16 may be mounted inside the metal mold 10 in the same manner as described in connection with the first embodiment, that is, by using the air pressure described in Fig. 1 (a). Therefore, the details of how this mounting may occur are not described in Fig. 2 (a).

In the current embodiment, a cavity 3 is provided by the combined upper and lower molds 1 and 2, and the upper-half mold 1 has a cavities 3b that permit the part other than the peripheral edge portion of the metallic plate 16 to be deformed into the curved surface having projections and depressions thereon.

This cavities 3b are capable of absorbing any possible deformation of the bottom 16a of the metallic plate 16 that may occur when the metallic plate 16 is placed under the pressure of the synthetic resin 20 that is injected into the metal mold 10.

The metallic plate 16 has a fold-back part 16a on its peripheral edge portion, and the fold-back part 16a may become deformed into the curled part when it is placed under the pressure of the synthetic resin 20 that is injected into the metal mold 10. The upper-half mold 1 has a gap 3a that is located opposite the fold-back part 16a that is capable of absorbing the deformation of the fold-back part 16a into the curled part.

As synthetic resin 20 is injected into the metal mold 10 through an inlet port 6 as indicated by an arrow 17, the synthetic resin 20 flows as indicated by arrows 18, 19, placing the fold-back part 16a of the metallic plate 16 under the pressure so that it can become deformed into the curled part 16c, with placing the bottom 16b of the metallic plate 16 under the pressure so that it can become deformed into a projection 16d (Fig. 2 (c)).

As the injected synthetic resin 20 becomes hardened and then contracts by itself, the parts of the injected synthetic resin 20 that are in contact with the curled part 16c and projection 16d will also contract by itself. This permits the metallic plate 16 and synthetic resin 20 to be joined firmly.

It should be noted that the metallic plate 16 may previously be formed so that it has projections 16d on the bottom 16b thereof. In this case, the synthetic resin 20 injected into the metal mold 10 can be joined firmly to the projection 16d as the injected synthetic resin 20 hardens and contracts.

### EMBODIMENT 3

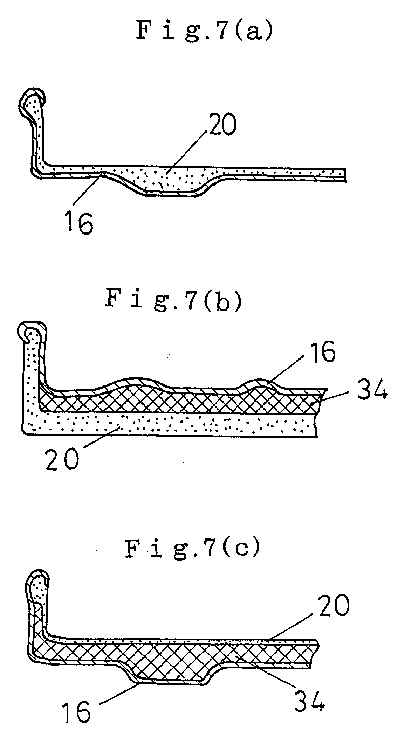

Fig. 7 (a) through Fig. 7 (c) represent other examples of the final product that includes the metallic plate and synthetic resin that may be joined together according to the methods described above in the first and second embodiments.

The example shown in Fig. 7 (a) is different from the examples described in the first and second embodiments, in which the metallic plate 16 is located outside and the synthetic resin 20 is located inside.

The example shown in Fig. 7 (b) is similar to the examples described in the first and second embodiments, in which the metallic plate 16 is located inside and the synthetic resin 20 is located outside. In this example, an additional material 34, such as rubber, glass, ceramics, waste plastics and the like, is interposed between the metallic plate 16 and synthetic resin 20.

The example shown in Fig. 7 (c) is similar to the example shown in Fig. 7 (a), but it includes an additional material 34 such as rubber that is interposed between the outside metallic plate 16 and inside synthetic resin 20.

### EMBODIMENT 4

Referring next to Fig. 3, the fourth embodiment of the present invention is described.

Initially, a metallic plate 22 formed like a dome and a thermoplastic synthetic resin molded product 21 are provided. The metallic plate 22 and thermoplastic synthetic resin molded product 21 that are to be joined together are formed to have an analogous shape on their respective surfaces that are to engage each other. Specifically, the metallic plate 22 may be obtained by pressing a metal blank into that particular shape, and the thermoplastic synthetic resin molded product 21 may be obtained by injecting the synthetic resin into the metal mold and then allowing it to contract completely.

The metallic plate 22 is heated, and the heated metallic plate 22 is then placed against the thermoplastic synthetic resin molded product 21 so that both can engage each other on their respective joint surfaces under the applied pressure. The part of the thermoplastic synthetic resin molded product 21 that is located on its joint surface is then heated by the hot metallic plate 22, allowing the synthetic resin on that part to be melted. The melted synthetic resin is then allowed to harden and contract. Thus, the two elements may be combined into a single unit by joining the synthetic resin to the metallic plate 22.

According to the method described in the current embodiment, when the thermoplastic synthetic resin molded product 21 engages the heated metallic plate 22, only that part of the thermoplastic synthetic resin molded product 21 that contacts the heated metallic plate 22 is allowed to melt, with the other parts of the molded product 21 (the outer side in Fig. 3) having already contracted. Thus, the dimensional stability of the final product can be achieved.

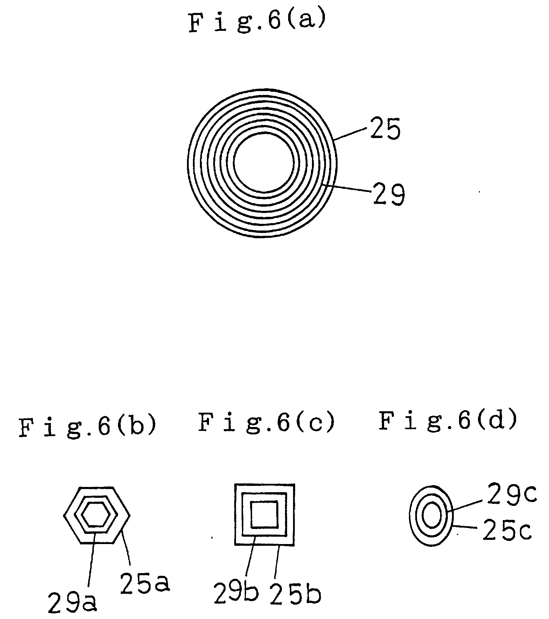

The joint surface of the metallic plate that is to engage the corresponding joint surface of the thermoplastic synthetic resin molded product may previously be formed to have projections and depressions 26, 26a, 29, 29a, 29b, 29c, as shown in Fig. 5 (a) through Fig. 5 (c) and Fig. 6 (a) through Fig. 6 (d). In this way, that part of the molded product that exists on its joint surface is allowed to melt when the thermoplastic synthetic resin molded product is contacted by the heated metallic plate. The molded product and metallic plate can be joined together more firmly when the melted synthetic resin hardens and contracts.

Fig. 5 (a) through Fig. 5 (c) describe the steps of joining the thermoplastic synthetic resin molded product to the metallic plate 27 formed like a dome having projections and depressions thereon.

Fig. 6 (a) represents an example in which the metallic plate 25 has concentric recesses 29, Fig. 6 (b) represents an example in which the metallic plate 25a formed into a hexagonal shape has an analogous hexagonal recess 29a, Fig. 6 (c) represents an example in which the metallic plate 25b formed into a square shape has an analogous square recess 29b, and Fig. 6 (d) represents an example in which the metallic plate 25c formed into an elliptical shape has an analogous elliptical recess 29c. In those examples, the respective metallic plates 25, 25a, 25b, and 25c are shown as viewed in the plane, and may be used as the eating/drinking utensils, respectively.

The metallic plate 22 may be made of copper or aluminum that has a less iron loss. In this case, the metallic plate 22 may be heated by the heater.

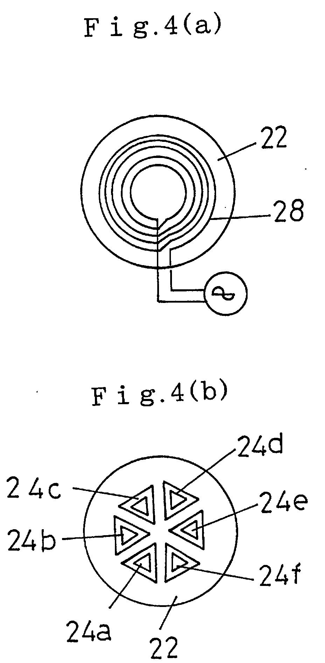

When the metallic plate 22 is made of other materials that have an iron loss, it may be heated by the high frequency or low frequency current induction heating. Examples are shown in Fig. 4 (a) and Fig. 4 (b). Fig. 4 (a) represents the single pole arrangement that includes a single wire 28 coiled concentrically. Fig. 4 (b) represents the multiple pole arrangement that includes a plurality of individual wires 24a, 24b, 24c, 24d, 24e, 24f coiled independently of each other.

### EMBODIMENT 5

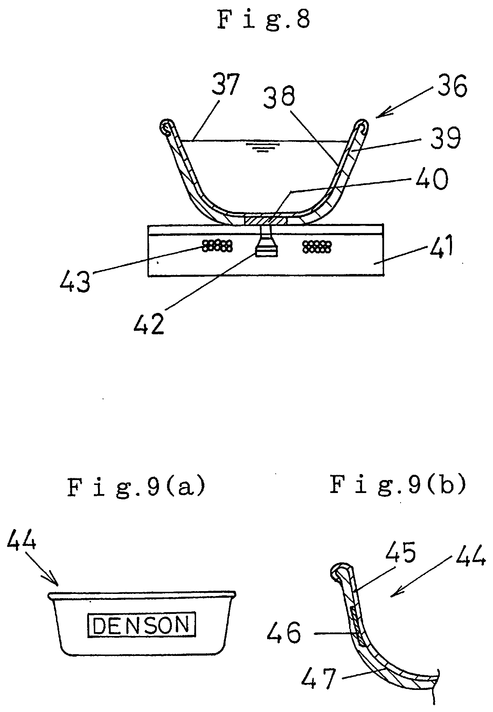

Figs. 8 through 10 represent the final products, respectively, that may be obtained according to the methods described so far, and describe how those final products may be used.

Each of the final products represented in Figs. 8 through 10 includes the metallic plate located inside and the synthetic resin located outside.

Specifically, Fig. 8 represents a cooking device 36 that includes the metallic plate 38 located inside and the synthetic resin 39 located outside. The cooking device 36 may be used with the heater 41 that incorporates an induction-heating coil 43, and the contents of the cooking device 38 may be cooked and heated by placing the cooking device 38 on the heater 41.

In this case, the synthetic resin 39 may be a transparent synthetic resin, which allows the infrared ray sensor 42 in the heater 41 to sense the actual internal temperature inside the cooking device 36. The actual internal temperatures provided by the sensor 42 may be helpful in knowing any overheat situation or cooking conditions that may be controlled either automatically or manually.

Alternatively, the synthetic resin 39 may be a non-transparent synthetic resin, in which case a transparent glass or any heat-sensitive material may be provided on the area as represented by 40. This may also be helpful in knowing the actual cooking temperatures from the outside while the cooking proceeds.

Fig. 9 (a) and Fig. 9 (b) represent an eating/drinking utensil 44 that includes the metallic plate 45 located inside and the synthetic resin 47 located outside. In this case, the synthetic resin 47 may also be a transparent synthetic resin, and any label that indicates a trademark, name or the like may he attached to the outside of the metallic plate 45 so that it can be visible from the outside of the article 44.

Fig. 10 represents a cooking device 48 that may be used with the electromagnetic induction heater 51. The cooking device 48 includes the metallic plate 49 located inside and the synthetic resin 50 located outside. The metallic plate 49 may be made of any materials, such as stainless steel, iron and the like, that can be heated by the electromagnetic induction. The heating or cooking may occur by placing the cooking device 48 on the heater 51. Examples of the synthetic resin 50 may include PP (polypropylene), PC (polycarbonate) and the like.

## Claims

1. A method for joining synthetic resin to a metallic plate including the steps of mounting a metallic plate obtained by pressing a metallic blank into a particular shape inside a synthetic resin injection metal mold and injecting synthetic resin into the said metal mold for joining the injected synthetic resin to the metallic plate, wherein the metallic plate is formed to include a curling part on its peripheral edge portion that is curved toward the side of the metallic plate on which the injected synthetic resin is to be joined to the metallic plate, said curling part being formed such that the spacing between the free end of said curling part and the side of the metallic plate on which the injected synthetic resin is to be joined to the metallic plate can be smaller than the space inside said curling part, and wherein the injection of the synthetic resin into the metal mold having the metallic plate set in position occurs against the side of the metallic plate on which the injected synthetic resin is joined to the metallic plate so that part of the injected synthetic resin can enter under pressure into said curling portion, whereby the metallic plate and the injected synthetic resin are joined together.

2. A method for joining synthetic resin to a metallic plate including the steps of mounting a metallic plate obtained by pressing a metallic blank into a particular shape inside a synthetic resin injection metal mold and injecting synthetic resin into the said metal mold for joining the injected synthetic resin to the metallic plate, wherein the metallic plate is formed to include a fold-back part on its peripheral edge portion that is curved toward the side of the metallic plate on which the injected synthetic resin is to be joined to the metallic plate, and wherein the injection of the synthetic resin into the metal mold having the metallic plate set in position occurs against the side of the metallic plate on which the injected synthetic resin is to be jointed to the metallic plate so that part of the injected synthetic resin can enter under pressure into said fold-back part, thereby expanding the interior of said fold-back part so that it can become larger than the spacing between the free end of said fold-back part and the side of the metallic plate on which the injected synthetic resin is to be joined to the metallic plate, whereby the metallic plate and the injected synthetic resin are joined together.

3. The method for joining synthetic resin to a metallic plate, as defined in Claim 2, wherein with the metallic plate being set in position inside the synthetic resin injection metal mold, a space is provided between the fold-back part formed on the peripheral edge portion of the metallic plate and the part of synthetic resin injection metal mold oppositing the said fold-back part, said space being capable of absorbing the expansion of the fold-back part that occurs when part of the injected synthetic resin enter into the fold-back part.

4. The method for joining synthetic resin to a metallic plate, as defined in any one of Claims 1 through 3, wherein with the metallic plate being set in position inside the synthetic resin injection metal mold, the metallic plate includes a part other than the peripheral edge portion of the metallic plate that may become deformed into a curved surface having projections and depressions when it is placed under the pressure of the synthetic resin injected against the side of the metallic plate on which the injected synthetic resin is to be joined to the metallic plate.

5. The method for joining synthetic resin to a metallic plate, as defined in Claim 4, wherein with the metallic plate being set in position inside the synthetic resin injection metal mold, a space is provided between the metal mold and the metallic plate, said space being capable of absorbing the deformation of the part other than the peripheral edge portion of the metallic plate that occurs when it is placed under the pressure of the synthetic resin injected against the side of the metallic plate on which the injected synthetic resin is to be joined to the metallic plate.

6. The method for joining synthetic resin to a metallic plate, as defined in any one of Claims 1 through 3, wherein with the metallic plate being set in position inside the synthetic resin injection metal mold, the metallic plate includes a part other than the peripheral edge portion of the metallic plate that has projections and depressions on the surface thereof on the side of the metallic plate on which the injected synthetic resin is to be joined to the metallic plate.

7. The method for joining synthetic resin to a metallic plate, as defined in any one of Claims 1 through 6, wherein the synthetic resin is a transparent synthetic resin.

8. The method for joining synthetic resin to a metallic plate, as defined in any one of Claims 1 through 7, wherein the metallic plate is mounted inside the synthetic resin injection metal mold by using the air pressure.

9. A method for joining synthetic resin to a metallic plate, wherein the method includes the steps of:
providing a metallic plate obtained by pressing a metal blank, said metallic plate having its joint surface formed into a particular shape;
providing a thermoplastic synthetic resin molded product, said thermoplastic synthetic resin molded product having its joint surface formed into a shape analogous to the particular shape of the metallic plate;
heating the metallic plate; and
making the thermoplastic synthetic resin molded product in direct contact with the heated metallic plate under the applied pressure so that the thermoplastic synthetic resin molded product can engage the heated metallic plate on their respective joint surfaces, whereby the heated metallic plate and the thermoplastic synthetic resin molded product are joined together into a single unit.

10. The method for joining synthetic resin to a metallic plate, as defined in Claim 9, wherein the respective joint surfaces of the metallic plate and thermoplastic synthetic resin molded product are formed to have projections and depressions thereon.

11. The method for joining synthetic resin to a metallic plate, as defined in Claim 9 or 10, wherein the thermoplastic synthetic resin is a transparent thermoplastic synthetic resin.

12. The method for joining synthetic resin to a metallic plate, as defined in Claim 9, wherein the step of heating the metallic plate is performed by using a heater.

13. The method for joining synthetic resin to a metallic plate, as defined in Claim 9, wherein the step of heating the metallic plate is performed by means of a high-frequency or low-frequency current induction heating.
